# DEMANDE DE BREVET EUROPEEN

(11) **EP 0 565 456 A1**
(43) Date de publication de la demande: **13.10.1993**
(21) Numéro de dépôt: 93400940.8
(22) Date de dépôt: 09.04.1993
(51) Int. Cl.: B65G 47/26, B65G 39/06, B65G 39/07

(54) **Transporteur accumulateur à rouleaux montés fous sur des arbres transversaux entrainés en rotation**

(30) Priorité: 10.04.1992 FR 9204441
(71) Demandeur: INTERROLL S.A., F-21150 Venarey les Laumes (FR)
(72) Inventeur: Schnopp, André, F-21140 Semur en Auxois (FR)

(57) **Abrégé**

Un transporteur accumulateur comprend des rouleaux (1) montés fous sur des arbres transversaux (2) entraînés en rotation.

Pour assurer l'arrêt total, dans une zone d'accumulation d'articles légers, des rouleaux et éviter ainsi l'endommagement de ces articles chaque rouleau (1) comprend un moyeu tubulaire central en matière rigide, à surface interne (6a) lisse, à faible coefficient de frottement, d'un diamètre interne supérieur au diamètre externe de l'arbre transversal d'entraînement (2), et un manchon périphérique cylindrique (7) à section transversale circulaire, entourant étroitement le moyeu (6) et constitué en une matière alvéolaire à cellules ouvertes ou du type mousse, élastique, aisément compressible, à surface externe (7a) irrégulière formée de cellules ouvertes vers l'extérieur et de filaments de matière libres.

## Description

La présente invention concerne un transporteur accumulateur à rouleaux montés fous sur des arbres transversaux entraînés en rotation.

On connaît déjà des transporteurs de ce type qui comportent généralement un bâti s'étendant longitudinalement et sur lequel sont montés des arbres parallèles, s'étendant transversalement et espacés les uns des autres dans le sens longitudinal. Ces arbres transversaux sont entraînés en rotation, dans le même sens et à la même vitesse, à partir d'une unité de motorisation accouplée aux différents arbres par tous moyens appropriés tels que chaînes, courroies etc.. Sur chaque arbre transversal est enfilé au moins un rouleau présentant un alésage central d'un diamètre interne supérieur au diamètre externe de l'arbre, ainsi qu'il est décrit dans les brevets FR-A-2 537 103 et US-A-4 266 660. Par ailleurs on choisit les matières constituant l'arbre (en général un acier) et le ou les rouleaux (en général une matière plastique rigide) de telle façon que le coefficient de frottement entre l'alésage de chaque rouleau et l'arbre le portant soit suffisamment faible pour qu'en l'absence d'une charge prenant appui sur les rouleaux, ceux-ci restent immobiles sur l'arbre entraîné en rotation. C'est seulement lorsqu'un article pesant, déplacé au moyen du transporteur, vient prendre appui sur un rouleau que celui-ci, soumis au poids de l'article pesant, est alors entraîné en rotation, du fait du couple moteur plus important exercé alors par l'arbre sur le rouleau.

Jusqu'à présent les rouleaux des transporteurs du type précité ont été réalisés sous une forme annulaire monobloc, en une matière plastique rigide, à surfaces interne et externe lisses et présentant par conséquent les mêmes coefficients de frottement.

Une telle conception des rouleaux s'est révélée satisfaisante dans le cas d'articles ou objets relativement pesants car le poids relativement élevé de ceux-ci est suffisant pour que, lorsque les articles pesants sont arrêtés par une barrière quelconque dans une zone d'accumulation du transporteur, tous les rouleaux se trouvant sous eux soient immobilisés, malgré le frottement auquel ils sont soumis de la part de leurs arbres d'entraînement. Toutefois il n'en est pas de même lorsqu'il s'agit de transporter des articles relativement légers, à surface portant des inscriptions fragiles telles que celles des codes barres. En effet on a constaté que dans les zones d'accumulation, les rouleaux en matière plastique rigide et à surface externe lisse, se trouvant sous un article léger arrêté par une barrière, continuent à être entraînés en rotation, en frottant sous l'article. Un tel mouvementde rotation intempestif est dû au fait que le coefficient de frottement entre l'article léger et le rouleau en matière plastique rigide et à surface lisse est faible et que le faible poids de l'article n'est pas suffisant pour s'opposer au couple moteur produit par l'arbre d'entraînement tournant au contact de la surface interne lisse du rouleau. Un tel mouvement de rotation persistant des rouleaux dans une zone d'accumulation d'articles légers se traduit par des conséquences dommageables pour ces articles car si la durée d'immobilisation des articles dans la zone d'accumulation est suffisamment longue, il peut en résulter, par suite du frottement entre le rouleau sous-jacent, entraîné en rotation, et la surface inférieure de l'article, un effacement ou une altération des indications portées sur sa surface inférieure. Ceci a des conséquences particulièrement graves lorsque la surface inférieure de l'article porte une marque d'identification, tel qu'un code barres, devant être utilisé en aval à des fins diverses, par exemple pour des questions de tri, d'expédition, de classification etc...

La présente invention vise à remédier à cet inconvénient en procurant un transporteur du type précité dont les rouleaux ont une structure telle qu'ils restent parfaitement immobiles dans une zone d'accumulation, même si les articles transportés sont très légers.

A cet effet ce transporteur accumulateur à rouleaux montés fous sur des arbres transversaux entraînés en rotation dans le même sens, chaque rouleau ayant un diamètre interne supérieur à celui de l'arbre d'entraînement le portant, afin de créer un jeu entre eux, est caractérisé en ce que chaque rouleau comprend un moyeu tubulaire central en matière rigide, à surface interne lisse, à faible coefficient de frottement, d'un diamètre interne supérieur au diamètre externe de l'arbre transversal d'entraînement, et un manchon périphérique cylindrique à section transversale circulaire, entourant étroitement le moyeu et constitué en une matière alvéolaire à cellules ouvertes ou du type mousse, élastique, aisément compressible, à surface externe irrégulière formée de cellules ouvertes vers l'extérieur et de filaments de matière libres.

On décrira ci-après, à titre d'exemple non limitatif, une forme d'exécution de la présente invention, en référence au dessin annexé sur lequel :
La figure 1 est une vue en coupe verticale et longitudinale partielle, dans une zone d'accumulation, d'un transporteur accumulateur à rouleaux fous suivant l'invention.
La figure 2 est une vue en coupe verticale et transversale partielle faite suivant la ligne II-II de la figure 1.

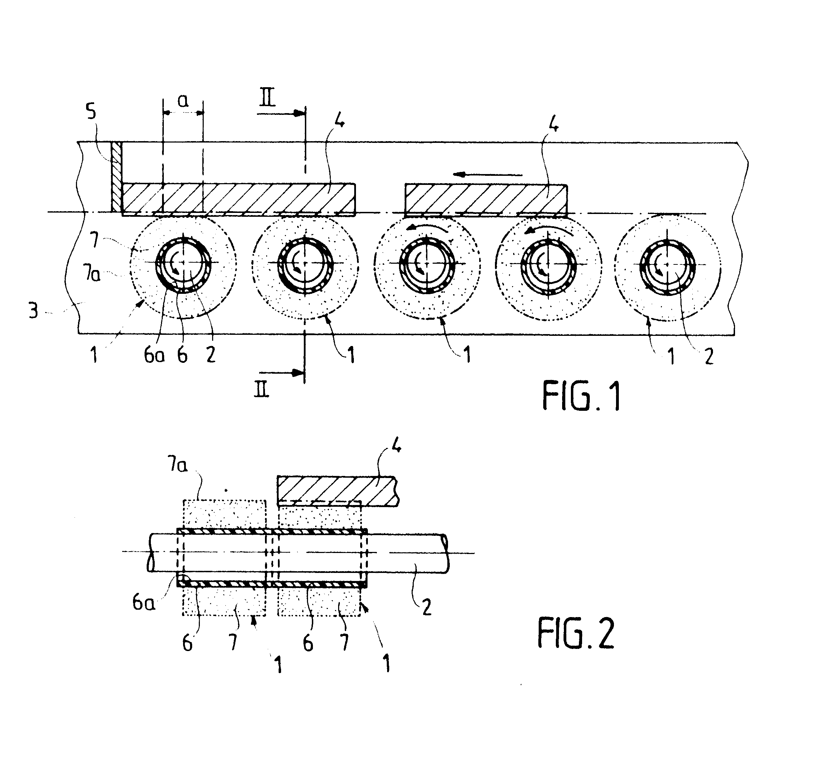

Sur les figures 1 et 2 est représenté un transporteur accumulateur à rouleaux 1 qui sont montés fous sur des arbres transversaux 2 entraînés en rotation dans le même sens (sens inverse des aiguilles d'une montre) et qui sont portés, à leurs extrémités, par des supports longitudinaux appropriés 3, tel que des profilés horizontaux. D'une manière bien connue dans la technique, tous les arbres transversaux 2 sont entraînés en rotation dans le même sens, à partir d'un moteur, par l'intermédiaire d'un mécanisme de transmission approprié à courroie et poulies, chaîne et roues dentées etc... Les articles 4 qui sont déplacés sur le transporteur, de la droite vers la gauche sur la figure 1, peuvent être relativement plats et légers et ils peuvent être contenus dans des emballages en matière souple. Ces articles légers 4 sont en appui sur les divers rouleaux et ils sont transportés vers la gauche jusqu'à une zone d'accumulation qui est délimitée, en aval, par une barrière transversale 5 qui les arrête sur le transporteur.

Suivant l'invention chaque rouleau 1 se trouvant dans la zone d'accumulation a des surfaces interne et externe qui ne présentent pas le même coefficient de frottement, c'est-à-dire que ces surfaces interne et externe ont des coefficients de frottement respectivement faible et élevé.

Suivant une forme d'exécution non limitative, chaque rouleau 1 est du type composite et il est constitué d'un moyeu central tubulaire 6 à surface interne 6a lisse, en une matière rigide, à faible coefficient de frottement, par exemple en chlorure de polyvinyle, à section transversale circulaire d'un diamètre interne supérieur au diamètre de l'arbre d'entraînement 2, et d'un manchon périphérique cylindrique 7, à section transversale circulaire et entourant étroitement le moyeu 6. Le manchon périphérique externe 7 avec lequel sont en contact les articles 4, est, lui, constitué en une matière à coefficient de frottement élevé. Une matière qui s'est révélée particulièrement appropriée est une matière alvéolaire ou mousse à cellules ouvertes, fortement élastique, aisément compressible, à surface externe irrégulière 7a formée de cellules ouvertes vers l'extérieur et de filaments de matière libres. D'excellents résultats ont été obtenus avec un manchon 7 réalisé en une mousse formée d'un mélange de polyol et d'isocyanate.

Lorsqu'aucun article léger 4 n'est en appui sur un rouleau 1, ce qui est le cas du rouleau 1 situé à l'extrémité droite de la série de rouleaux représentés sur la figure 1, ce rouleau n'est pas entraîné en rotation par l'arbre transversal 2 qui tourne à travers lui et il demeure par conséquent immobile. Ceci résulte du fait que le couple dû au frottement exercé par l'arbre d'entraînement transversal 2, le long de la génératrice supérieure suivant laquelle il est en contact avec la surface interne lisse 6a du moyeu tubulaire 6, n'est pas suffisant, par suite du faible coefficient de frottement entre l'arbre 2 et la surface interne lisse 6a du moyeu tubulaire 6, pour entraîner en rotation le rouleau composite 1.

Par contre aussitôt qu'un article 4, aussi léger soit-il, arrive sur des rouleaux, son poids, même faible, jouté à celui du rouleau intervient pour créer un couple moteur, dans la zone de contact entre l'arbre 2 et la surface interne 6a du moyeu tubulaire 6, suffisant pour entraîner en rotation le rouleau composite 1. Sur la figure 1 est représenté un article 4 en appui sur les deuxième et troisième rouleaux en partant de la droite, qui sont entraînés en rotation par leurs arbres respectifs 2 et qui assurent ainsi le déplacement en translation de l'article 4 vers la gauche, en direction de la barrière 5 délimitant la zone d'accumulation.

Lorsque l'article 4 est arrêté dans la zone d'accumulation, ceci se traduit par un arrêt instantané des rouleaux 1 se trouvant sous lui, comme cela est le cas des deux derniers rouleaux 1 situés à gauche dans la série de rouleaux du transporteur. L'arrêt automatique instantané des deux rouleaux 1 sur lesquels prend appui l'article 4 arrêté par la barrière 5, est dû au fait que le coefficient de frottement entre la surface externe 7a du manchon périphérique des rouleaux 1 et la face inférieure de l'article 4 est très élevé. Ce coefficient de frottement élevé résulte de la texture particulière du manchon périphérique 7 qui est réalisé en une mousse élastique, à cellules ouvertes et à surface périphérique 7a irrégulière présentant des alvéoles ouvertes vers l'extérieur et une multiplicité de filaments de matière libres. Par ailleurs comme la matière du manchon 7 est très élastique et fortement compressible, chaque article 4, aussi léger soit-il, est en contact avec le manchon périphérique 7 de chaque rouleau 1 non plus suivant une zone de contact rectiligne, correspondant à la génératrice supérieure de la surface cylindrique du manchon 7, mais suivant une zone horizontale relativement écrasée, de largeur a, représentée d'une manière exagérée sur la figure 1. Cet écrasement, dû à la nature élastique et aisément compressible du manchon 7, permet en outre de compenser les différences de cotes éventuelles entre les arbres 2 successifs.

Grâce à la structure particulière des rouleaux composites 1 du transporteur suivant l'invention, ces rouleaux restent complètement immobiles dans la zone d'accumulation même si les articles 4 en appui sur eux sont très légers. Par conséquent, pendant toute la période de temps durant laquelle les articles 4 sont retenus par la barrière 5, leurs faces inférieures ne sont pas soumises à un frottement permanent de la part des rouleaux sous-jacents 1 et les marques qu'elles portent ne sont nullement altérées.

Ainsi qu'il est représenté sur la figure 2, la longueur ou dimension axiale de chaque moyeu tubulaire 6 est de préférence un peu supérieure à la dimension axiale du manchon périphérique 7 en mousse si bien que chaque moyeu 6 fait légèrement saillie de chaque côté du manchon périphérique 7. De ce fait lorsque les moyeux 6 sont disposés bout à bout sur l'arbre d'entraînement 2, il subsiste un intervalle entre les manchons périphériques 7 de deux rouleaux 1 voisins sur l'arbre 2. Cette disposition n'est toutefois pas limitative et la dimension axiale du moyeu tubulaire central 6 de chaque rouleau composite 1 pourrait être égale ou inférieur à celle du manchon périphérique 7 du type mousse.

Le manchon périphérique 7 d'un rouleau composite 1 peut être fixé à demeure au moyeu tubulaire 6 qui le porte, par exemple par collage. Suivant une variante le manchon périphérique 7 peut être simplement emboîté à frottement libre sur le moyeu tubulaire 6. A cet effet le manchon périphérique 7 est réalisé avec un alésage central ayant un diamètre, à l'état non contraint, légèrement inférieur au diamètre externe du moyeu tubulaire 6. De ce fait, lorsque le manchon périphérique 7, en mousse élastique, est enfilé sur le moyeu tubulaire 6, sa zone interne est légèrement comprimée et cette compression assure le maintien du manchon périphérique 7 en position, sous l'effet de son seul frottement sur le moyeu tubulaire 6.

D'autres solutions pourraient naturellement être envisagées pour la réalisation d'un rouleau annulaire 1 dont les surfaces interne et externe ont des coefficients de frottement différents, respectivement faible et élevé. Par exemple le moyeu tubulaire rapporté 6 pourrait être supprimé et remplacé en prévoyant une surface interne lisse du manchon périphérique 7. Cette surface interne lisse pourrait être réalisée par un dépôt d'une pellicule sur cette surface interne, par un léger chauffage de celle-ci de manière à faire fondre la matière plastique et à rendre lisse la surface interne etc...

Par ailleurs bien que, dans la forme d'exécution non limitative du transporteur suivant l'invention qui a été décrite précédemment, chaque arbre 2 porte une succession de "galets" ou rouleaux 1 de petite dimension axiale, il va de soi que le transporteur pourrait aussi ne comporter qu'un seul rouleau de grande longueur sur chaque arbre d'entraînement transversal 2.

## Revendications

1.- Transporteur accumulateur à rouleaux (1) montés fous sur des arbres transversaux (2) entrai- nés en rotation dans le même sens, chaque rouleau ayant un diamètre interne supérieur à celui de l'arbre d'entraînement le portant, afin de créer un jeu entre eux, caractérisé en ce que chaque rouleau (1) comprend un moyeu tubulaire central en matière rigide, à surface interne (6a) lisse, à faible coefficient de frottement, d'un diamètre interne supérieur au diamètre externe de l'arbre transversal d'entraînement (2), et un manchon périphérique cylindrique (7) à section transversale circulaire, entourant étroitement le moyeu (6) et constitué en une matière alvéolaire à cellules ouvertes ou du type mousse, élastique, aisément compressible, à surface externe (7a) irrégulière formée de cellules ouvertes vers l'extérieur et de filaments de matière libres.

2.- Transporteur suivant la revendication 1 caractérisé en ce que la longueur ou dimension axiale de chaque moyeu tubulaire (6) est supérieure à la dimension axiale du manchon périphérique (7) en mousse si bien que chaque moyeu (6) fait légèrement saillie de chaque côté du manchon périphérique (7).

3.- Transporteur suivant l'une quelconque des revendications 1 et 2 caractérisé en ce que le manchon périphérique (7) en matière alvéolaire est enfilé librement sur le moyeu tubulaire (6).

4.- Transporteur suivant la revendication 3 caractérisé en ce qu'au repos le manchon périphérique (7) en matière alvéolaire a un alésage central d'un diamètre un peu inférieur au diamètre externe du moyeu tubulaire (6) de manière à être en contact à frottement avec ce moyeu (6), une fois monté sur celui-ci, par suite d'une légère compression de sa zone interne.
